Europäisches Patentamt

European Patent Office

Office européen des brevets

(11) Veröffentlichungsnummer: **0 283 645 B1**

## (12) EUROPÄISCHE PATENTSCHRIFT

(45) Veröffentlichungstag der Patentschrift: **04.11.92**

(51) Int. Cl.⁵: **H04M 1/72**

(21) Anmeldenummer: **88100579.7**

(22) Anmeldetag: **16.01.88**

(54) **Schnurloses Telefon.**

(30) Priorität: **26.03.87 DE 3710001**

(43) Veröffentlichungstag der Anmeldung:
**28.09.88 Patentblatt 88/39**

(45) Bekanntmachung des Hinweises auf die
Patenterteilung:
**04.11.92 Patentblatt 92/45**

(84) Benannte Vertragsstaaten:
**AT BE CH DE ES FR GB GR IT LI LU NL SE**

(56) Entgegenhaltungen:
**US-A- 4 509 201**

**NACHRICHTENTECHNISCHE ZEITSCHRIFT
N.T.Z., Band 38, Nr. 7, Juli 1985, Seiten
468-471, Berlin, DE; H.-P. BAUER:
"Schnurloses Telefon für den
900-MHz-Bereich"**

(73) Patentinhaber: **ROBERT BOSCH GMBH
Postfach 30 02 20
W-7000 Stuttgart 30(DE)**

(72) Erfinder: **Walsch, Rolf, Ing. grad.
Hasenheide 90
W-1000 Berlin 61(DE)**

(74) Vertreter: **Schmidt, Hans-Ekhardt
Robert Bosch GmbH Geschäftsbereich Elektronik Patent- und Lizenzabteilung Forckenbeckstrasse 9-13
W-1000 Berlin 33(DE)**

## Beschreibung

Die Erfindung betrifft ein schnurloses Telefon nach dem Oberbegriff des Anspruchs 1.

Stand der Technik

Es ist ein schnurloses Telefon bekannt (NTZ, 1985, Heft 7, Seiten 468 bis 471), bei dem Basisstation und Handapparat je eine Mikroprozessorschaltung und je einen Feldstärkeauswerter enthalten. Der Handapparat enthält darüber hinaus einen auswechselbaren Akkumulator und eine Spannungsüberwachungsschaltung, die beim Unterschreiten einer vorgegebenen Akkumulator-Mindestspannung über die Mikroprozessorschaltung des Handapparates einen Warnton auslöst. Dieser macht den Benutzer des Handapparates darauf aufmerksam, daß der erschöpfte Akkumulator des Handapparates gegen einen in der Basisstation aufgeladenen bzw. nachgeladenen Reserveakkumulator ausgewechselt werden muß. Durch das Auswechseln des Akkumulators wird jedoch normalerweise eine gerade bestehende Telefonverbindung unterbrochen, so daß nach dem Auswechseln neu gewählt werden muß.

Es ist weiterhin ein Funktelefon bekannt (US-A-4 509 201), bei dem nach dem Unterschreiten der Betriebsspannung unter einen vorgegebenen Minimalwert automatisch ein Ersatzakkumulator eingeschaltet wird, der alle für den Verbindungsaufbau relevanten Daten in einem Speicher einer elektronischen Steuereinheit (Central Processor Unit) speichert.

Aufgabe

Der Erfindung liegt die Aufgabe zugrunde, den durch das Auswechseln eines Akkumulators des Handapparates eines schnurloses Telefons entstehenden Zusammenbruch der Telefonverbindung und das anschließende neue Wählen zu vermeiden.

Lösung

Diese Aufgabe wird bei einem gattungsgemäßen schnurlosen Telefon durch die kennzeichnenden Merkmale des Anspruchs 1 gelöst.

Erzielbare Vorteile

Der mit der Erfindung erzielte Vorteil besteht insbesondere darin, daß mit einem verhältnismäßig geringen schaltungstechnischen Aufwand eine bestehende Telefonverbindung trotz Akkumulatorwechsels nicht unterbrochen wird.

Beschreibung der Erfindung

Ein Ausführungsbeispiel der Erfindung ist in der Zeichnung an Hand zweier Figuren dargestellt und wird im folgenden näher beschreiben. Es zeigen

Fig. 1     ein stark vereinfachtes Blockschaltbild eines Handapparates eines erfindungsgemäßen schnurlosen Telefons und

Fig. 2     ein stark vereinfachtes Blockschaltbild einer zugehörigen Basisstation.

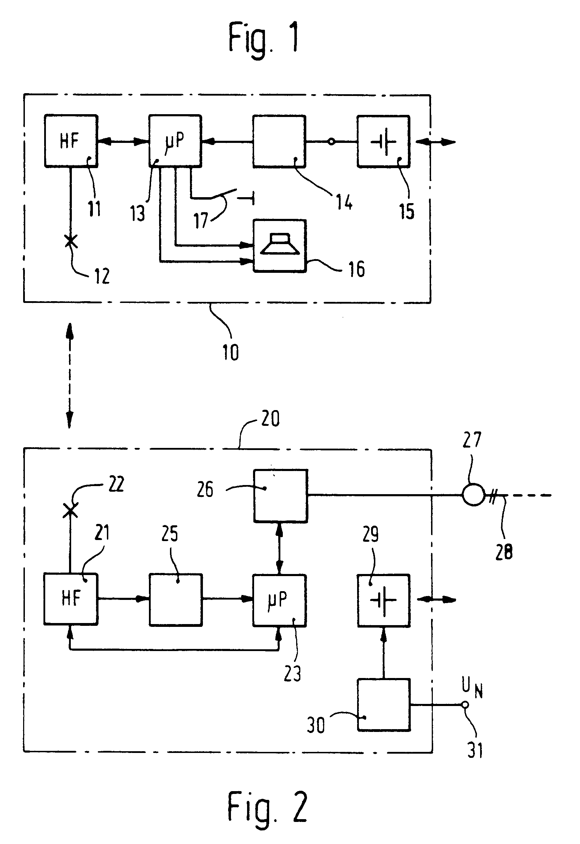

In Fig. 1 ist ein Handapparat 10 des erfindungsgemäßen schnurlosen Telefons gezeigt, der einen Hochfrequenzteil 11, eine damit verbundene Sende-Empfangsantenne 12, eine mit dem Hochfrequenzteil verbundene erste Mikroprozessorschaltung 13 und eine damit verbundene Spannungsüberwachungsschaltung 14 aufweist. Die Spannungsüberwachungsschaltung ist mit einem in dem Handapparat 10 auswechselbar untergebrachten Akkumulator 15 verbunden. An die Mikroprozessorschaltung 13 schließen sich ein in dem Handapparat untergebrachter elektroakustischer Wandler 16 und eine Gesprächstaste 17 an.

In Fig. 2 ist eine Basisstation 20 des erfindungsgemäßen schnurlosen Telefons gezeigt, die eine mit einem Hochfrequenzteil 21 verbundene Sende-Empfangsantenne 22 und eine mit dem Hochfrequenzteil unmittelbar verbundene zweite Mikroprozessorschaltung 23 aufweist. Zwischen einem Ausgang des Hochfrequenzteils 21 und einem Eingang der zweiten Mikroprozessorschaltung befindet sich ein Feldstärkeauswerter 25, und an die Mikroprozessorschaltung 23 schließt sich ein Fernmeldeteil 26 an, dessen Ausgang mit einer Fernmeldedose 27 verbunden ist, an der die Teilnehmerleitung 28 (A/B-Ader) des Fernsprechnetzes endet. Ein Reserveakkumulator 29 ist in der Basisstation 20 auswechselbar angeordnet und steht über eine Ladeschaltung 30 mit einem Netzspannungsanschluß 31 in Verbindung.

Das vorstehend beschriebene schnurlose Telefon hat folgende Funktion.

Stellt die Spannungsüberwachungsschaltung 14 des Handapparates 10 während eines Gespräches fest, daß die Spannung des Akkumulators 15 einen bestimmten Mindestwert unterschritten hat, so meldet sie diesen Zustand an die erste Mikroprozessorschaltung 13, die ein Warnsignal in dem elektroakustischen Wandler 16 auslöst. Der Teilnehmer kann nun den erschöpften Akkumulator 15 aus dem Handapparat 10 herausnehmen und gegen einen mittels der Ladevorrichtung 30 aus dem Netz aufgeladenen oder nachgeladenen Reserveakkumulator 29 der Basisstation 20 austauschen. Die Telefonverbindung wird dadurch nicht unterbrochen, denn der Feldstärkeauswerter 25 der Basisstation 20 stellte den durch das Herausnehmen des Akkumulators 15 entstehenden Ausfall der Sendeenergie des Handapparates fest und bewirkt über die zweite Mikroprozessorschaltung 23, daß die drahtseitige Verbindung zum Fernsprechnetz bzw. zu der Fernmeldeleitung 28 nicht unterbrochen wird.

Mit einer vorgegebenen, in der zweiten Mikro-prozessorschaltung 23 gespeicherten Zeitverzöge-rung wird die Funkverbindung zwischen Basisstation und Handapparat getrennt. Sobald der Akkumulator 15 ausgewechselt ist, stellt die Basisstation eine neue Funkverbindung zu dem Handapparat auf einem freien Funkkanal wieder her. Bei hergestellter Funkverbindung erhält der Teilnehmer über den elektroakustischen Wandler 16 ein bestimmtes Tonsignal, woraufhin er das vorher geführte Telefonat nach Betätigen der mit der ersten Mikroprozessorschaltung 13 verbundenen Gesprächstaste 17 fortsetzen kann.

**Patentansprüche**

1. Schnurloses Telefon mit einer mit dem Fernsprechnetz fest verbundenen Basisstation, die eine Mikroprozessorschaltung und einen Feldstärkeauswerter aufweist, und mit einem mit der Basisstation per Funk verbindbaren Handapparat, der eine Mikroprozessorschaltung und eine Spannungsüberwachungsschaltung für einen in dem Handapparat auswechselbar untergebrachten Akkumulator aufweist, die bei Unterschreiten einer vorgegebenen Akkumulator-Mindestspannung über die Mikroprozessorschaltung des Handapparates dafür sorgt, daß ein durch den Akkumulatorwechsel unterbrochenes Gespräch nach dem Auswechseln fortgesetzt werden kann, dadurch gekennzeichnet, daß der beim Auswechseln des Akkumulators (15) während eines Gespräches auftretende Feldstärkeinbruch mittels des Feldstärkeauswerters (25) erkannt und der Mikroprozessorschaltung (23) der Basisstation (20) mitgeteilt wird und daß diese Mikroprozessorschaltung nach einer vorgegebenen Zeit die Funkverbindung zwischen Basisstation (20) und Hand-parat (10) trennt, die Fernsprechverbindung zum Teilnehmer dagegen aufrechterhält und nach dem Akkumulatorwechsel eine neue Funkverbindung zwischen Basisstation und Handapparat auf einem freien Funkkanal herstellt.

2. Schnurloses Telefon nach Anspruch 1, dadurch gekennzeichnet, daß bei hergestellter neuer Funkverbindung über die erste Mikroprozessorschaltung (13) im Handapparat (10) ein Signalton ausgelöst wird, der den Teilnehmer zum Betätigen einer Gesprächstaste (17) und zum Fortsetzen des durch den Akkumulatorwechsel unterbrochenen Gesprächs veranlaßt.

3. Schnurloses Telefon nach Anspruch 1, dadurch gekennzeichnet, daß die Basisstation einen in dieser auswechselbar untergebrachten Reserveakkumulator (29) enthält, der über eine mit dem Stromnetz verbundene Ladeschaltung (30) der Basisstation aufgeladen bzw. nachgeladen wird.

**Claims**

1. A cordless telephone having a base station fixedly connected to the telephone network, the base station is provided with a micro processor circuitry and a field strength evaluator, and having a handset which can be connected by radio to the base station, the handset being provided with a micro processor circuitry and a voltage monitoring circuitry for a rechargeable battery interchangeably accommodated in the handset, which in the event of a pre-determined minimum voltage not being achieved in the rechargeable battery, ensures by way of the micro processor circuitry of the handset, that a conversation, which has been interrupted by interchanging the rechargeable battery, can be continued after the rechargeable battery has been interchanged, characterised in that the interruption in the field strength, which occurs during a conversation when replacing the rechargeable battery (15), is recognised by means of the field strength evaluator (25) and the micro processor circuitry (23) of the base station (20) is simultaneously informed and that after a predetermined time this micro processor circuitry disconnects the radio connection between the base station (20) and the handset (10), the telephone connection to the user on the other hand is maintained and after the rechargeable battery has been interchanged, a new radio connection between the base station and the handset is made on a free radio channel.

2. A cordless telephone as claimed in claim 1, characterised in that when a new radio connection is made, a signal tone is triggered in the handset (10) by way of the first micro processor circuitry (13), this signal tone causes the user to actuate a conversation key (17) and to continue the conversation interrupted by interchanging the rechargeable battery.

3. A cordless telephone as claimed in claim 1, characterised in that the base station has a reserve rechargeable battery (29) which is interchangeably accommodated in the base station, the reserve rechargeable battery (29) being charged or recharged by way of a charging circuit (30) in the base station and the charging circuit (30) being connected to the electricity supply.

## Revendications

1. Téléphone sans cordon composé d'un poste de base relié de manière fixe à un réseau téléphonique et comportant un circuit à microprocesseur ainsi qu'un circuit d'exploitation de l'intensité du champ, et un combiné relié par une liaison radio au poste de base, ce combiné comprenant un circuit à microprocesseur et un circuit de surveillance de la tension d'un accumulateur logé de manière interchangeable dans le combiné, et qui lorsque la tension passe en dessous d'une tension minimale prédéterminée de l'accumulateur, assure par l'intermédiaire du circuit à microprocesseur du combiné, la poursuite d'un conversation interrompue par le remplacement de l'accumulateur, une fois que ce remplacement est effectué, téléphone caractérisé en ce que lors du remplacement de l'accumulateur (15) au cours d'une conversation, le circuit d'exploitation de l'intensité du champ (25) détecte la chute de l'intensité du champ qui se produit et transmet cette information au circuit à microprocesseur (23) du poste de base (20) et après un temps prédéterminé, le circuit à microprocesseur coupe la liaison radio entre le poste de base (20) et le combiné (10) tout en conservant la ligne avec l'abonné et après le remplacement de l'accumulateur, il établit une nouvelle liaison radio entre le poste de base et le combiné à l'aide d'un canal radio libre.

2. Téléphone sans cordon selon la revendication 1, caractérisé en ce que lorsque la nouvelle liaison radio est établie, le premier circuit à microprocesseur (13) déclenche un signal sonore dans le combiné (10) qui sollicite l'abonné pour qu'il actionne une touche de conversation (17) et poursuive la conversation interrompue pendant le remplacement de l'accumulateur.

3. Téléphone sans cordon selon la revendication 1, caractérisé en ce que le poste de base comporte un accumulateur de réserve (29) logé de manière interchangeable, et qui est chargé ou rechargé à partir du réseau par un chargeur (30) du poste de base.

# Fig. 1

# Fig. 2